# EUROPEAN PATENT APPLICATION

(11) **EP 1 852 451 A1**
(43) Date of publication of application: **07.11.2007**
(21) Application number: 06714088.9
(22) Date of filing: 20.02.2006
(51) Int. Cl.: C08G 59/32, C08G 59/50, C08J 5/24

(54) **EPOXY RESIN, HARDENABLE RESIN COMPOSITION CONTAINING THE SAME AND USE THEREOF**

(30) Priority: 25.02.2005 JP 2005051150; 25.02.2005 JP 2005051959
(71) Applicant: NIPPON KAYAKU KABUSHIKI KAISHA, Tokyo 102-8172 (JP)
(72) Inventor: NAKANISHI, Masataka c/o Nippon Kayaku KK, Kita-ku, Tokyo, 1150042 (JP); AKATSUKA, Yasumasa c/o Nippon Kayaku KK, Sanyoonoda-shi, Yamaguchi, (JP); OSHIMI, Katsuhiko c/o Nippon Kayaku KK, Kita-ku, Tokyo 1150042 (JP); SUNAGA, Takao c/o Nippon Kayaku KK, Kita-ku, Tokyo 1150042 (JP)
(74) Representative: Gille Hrabal Struck Neidlein Prop Roos
(86) International application number: PCT/JP2006/302947
(87) International publication number: WO 2006/090662

(57) **Abstract**

It is an object of the present invention, with respect to a phenol aralkyl type epoxy resin, to suppress any crystal precipitation, improve the quality manageability and operation efficiency at composition production and enhance the properties, including heat resistance, thereof It is also intended to provide a resin composition that even when stored in the form of a varnish for a prolonged period of time, is resistant to crystal precipitation, excelling in storage stability and operation efficiency, and that gives a hardening product of low dielectric constant and low dielectric tangent excelling in heat resistance, water resistance and flame retardance.

There is provided an epoxy resin **characterized by** comprising a phenol aralkyl type epoxy resin in which a content (an area % measured by gel permeation chromatography) of a bifunctional compound is 20% or less, and provided a resin composition obtained therefrom.

## Description

### Technical Field

The present invention relates to a high molecular weight epoxy resin that provides a curable resin composition that is useful for various composite materials including electric and electronic parts insulation materials such as for high reliability semiconductor sealing, laminates (printed wiring boards and build-up boards) and CFRPs (carbon fiber reinforced plastics) and further optical materials, adhesives, paints, and the like, and a cured material of the composition.

The present invention also relates to a resin composition that provides a cured material having a low dielectric constant, a low dielectric tangent, and excellent heat resistance, water resistance, and flame retardancy, and provides excellent workability, the resin composition being suitably used for laminates, metal foil attached laminates, and insulation materials for build-up board, and the like.

### Background Art

Epoxy resin compositions are widely used in the fields of electric and electronic parts, structural materials, adhesives, paints, and the like, because of the workability, and the excellent electrical properties, heat resistance, adhesiveness, moisture resistance (water resistance), and the like, of their cured materials.

However, in the electric and electronic fields, recently, with their development, further improvements in properties have been desired, such as high purity of resin compositions, moisture resistance, adherence, dielectric property, low viscosity for highly filling fillers, and increased reactivity for shortening the molding cycle. In addition, materials that are light and have excellent mechanical properties have been desired as structure materials in the applications of aerospace materials and recreational and sports appliances and the like. Further, recently, halogen-based epoxy resins and antimony trioxide have often been used as flame retardants, particularly for electric and electronic parts, however, it is indicated that products using these contribute to generation of toxic substances such as dioxins by improper treatment after their disposal. As one method for solving the above described problems, the use of a phenol aralkyl resin having a biphenyl skeleton and its epoxidized material is described in Patent Document 1, Patent Document 2, and the like. However, the resin of this structure has strong crystallinity, so that, depending on the removal condition of the resin during manufacture, and the storage condition of the resin, crystals precipitate, increasing melt viscosity. In addition, when the resin is dissolved in a solvent, crystals precipitate and deposit as well, which is a significant problem for use as a composition.

From such background, in Patent Document 3, decreasing this crystallinity by controlling orientation in molecules is discussed, but this cannot be said to be always sufficient yet.

Further, recently, for printed wiring boards mounted on computers, communication equipment, and the like, high density and thin films have been promoted, and high heat resistance and insulation property have been required. Further, materials having a low dielectric constant and a low dielectric tangent have been desired for addressing high speed and high frequency of signals. Cyanate resins and BT resins (bismaleimide-triazine resins) are resin materials combining high heat resistance and a low dielectric property, and it is known that compounding an epoxy resin to these can reduce a water absorption rate and improve adhesiveness and workability. Patent Document 4 describes varnish in which an epoxy resin represented by general formula (7): 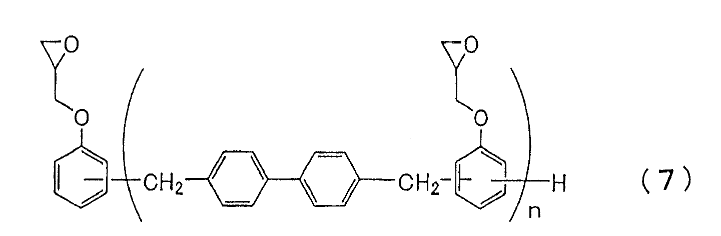 and a cyanate resin are mixed with a solvent.
Patent Document 1: Japanese Patent Application Laying Open (KOKAI) No. 11-140277
Patent Document 2: Japanese Patent Application Laying Open (KOKAI) No. 11-140166
Patent Document 3: Japanese Patent Application Laying Open (KOKAI) No. 2003-301031
Patent Document 4: Japanese Patent Application Laying Open (KOKAI) No. 2002-309085

### Disclosure of the Invention

It is an object of the present invention to provide a phenol aralkyl type epoxy resin that is useful for various composite materials including insulation materials for electric and electronic parts (such as high reliability semiconductor sealing materials), laminates (such as printed wiring boards and build-up boards) and CFRP, adhesives, paints, and the like, by suppressing crystal precipitation, improving the workability during manufacture and quality control of the composition, and further improving properties such as heat resistance.

The epoxy resin disclosed in the above described Patent Document 4 has excellent water resistance, but has the problem of having low solvent solubility because of high symmetry in the molecular structure so that low molecular weight compounds are likely to precipitate as crystals once varnish is prepared. Further, if the softening point is increased simply to avoid the crystallinity problem, conversely, the solubility in solvents tends to worsen.

It is also an object of the present invention to provide a resin composition that has no precipitation of low molecular weight compounds and has excellent workability and that provides a cured material having excellent heat resistance, dielectric property, water resistance, and flame retardancy.

As a result of diligently studying for solving the above described problems, the inventors have found that the above described problems can be solved by controlling the polymerization composition of a phenol aralkyl type epoxy resin, to arrive at the present invention.

In other words, the present invention relates to
(1) an epoxy resin characterized by comprising a phenol aralkyl type epoxy resin in which a content (an area % measured by gel permeation chromatography) of a bifunctional compound is 20% or less,
(2) the epoxy resin described in the above (1), wherein the phenol aralkyl type epoxy resin is of a structure represented by general formula (1): 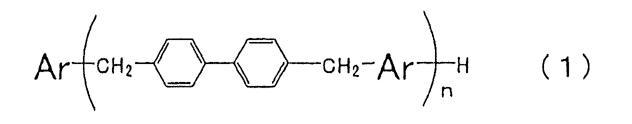 (in formula (1), n represents an average repetition number value of 1 to 10. Ar represents a glycidyl ether moiety of general formula (2): 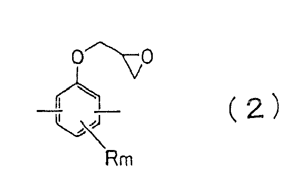 or general formula (3): 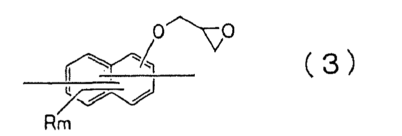 and may be the same or different from each other. In general formulas (2) and (3), m represents an integer of 0 to 3, and R each represents any of a hydrogen atom, a saturated or unsaturated alkyl group having 1 to 8 carbon atoms, and an aryl group, and may be the same or different from each other.),
(3) the epoxy resin described in the above (2), wherein the phenol aralkyl type epoxy resin is of a structure represented by general formula (4): 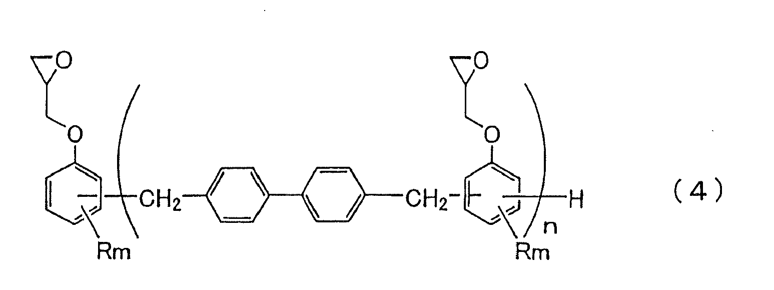 (in the formula, m represents an integer of 0 to 3, n represents an average repetition number value of 1 to 10, and R each represents any of a hydrogen atom, a saturated or unsaturated alkyl group having 1 to 8 carbon atoms, and an aryl group, and may be the same or different from each other.),
(4) the epoxy resin described in the above (2), wherein in general formula (1), all Rs are a hydrogen atom,
(5) the epoxy resin described in any one of the above (1) to (4), having a softening point of 70°C or more,
(6) the epoxy resin described in any one of the above (1) to (4), having a softening point of 60°C or more and an epoxy equivalent of 270 g/eq or more,
(7) a method of manufacturing the epoxy resin described in any one of the above (1) to (6), characterized by extracting and removing a bifunctional compound from a phenol aralkyl type epoxy resin or a mixed solution of the epoxy resin and its good solvent, using a solvent in which a trifunctional or higher functional molecule in the epoxy resin and the good solvent are less soluble (hereinafter referred to as a poor solvent),
(8) the method of manufacturing the epoxy resin described in the above (7), wherein the good solvent is a ketone-based solvent or an ester-based solvent,
(9) the method of manufacturing the epoxy resin described in the above (7) or (8), wherein the poor solvent is an alcohol,
(10) a curable resin composition containing the epoxy resin described in any one of the above (1) to (6) and a curing agent,
(11) a cured material obtained by curing the curable resin composition described in the above (10),
(12) a resin composition characterized by containing the epoxy resin described in the above (1), and a cyanate compound represented by general formula (5): 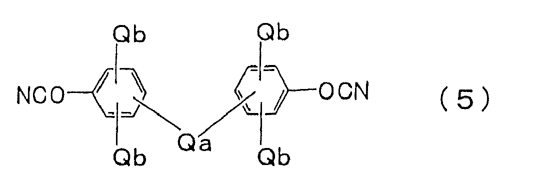 (in the formula, Qa represents a direct bond, or a substituent or an atom selected from the group of a methylene group, an isopropylidene group, a hexafluoroisopropylidene group, an ethylene group, an ethylidene group, a bis(methylidene)benzene group, a bis(methylidene)biphenyl group, a biphenylmethylidene group, a phenylmethylidene group, a bis(isopropylidene)phenyl group, a dicyclopentadienyl group, an oxygen atom, and a sulfur atom. Qb represents a hydrogen atom or an alkyl group having 1 to 4 carbon atoms, and each Qb may be the same or different from each other.)
   or general formula (6): 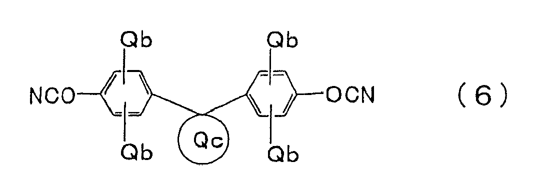 (in the formula, Qc represents a cyclic or linear alkylidene group having 5 to 10 carbon atoms, or a fluorenylidene group. Qb is the same as in general formula (5).) and/or a prepolymer prepared from the cyanate compound as a raw material,
(13) the resin composition described in the above (12), wherein the epoxy resin is the epoxy resin described in the above (2),
(14) the resin composition described in the above (12) or (13), wherein the cyanate compound is a compound having a bisphenol type structure,
(15) the resin composition described in any one of the above (12) to (14), wherein in the cyanate compound, Qa in general formula (5) is an isopropylidene group,
(16) the resin composition described in any one of the above (12) to (15), wherein Ar in general formula (1) is a glycidyl ether moiety selected from the group consisting of a phenyl glycidyl ether moiety, an ortho-cresol glycidyl ether moiety, a meta-cresol glycidyl ether moiety, and a para-cresol glycidyl ether moiety,
(17) the resin composition described in any one of the above (12) to (15), wherein Ar in general formula (1) is an α-naphthol glycidyl ether moiety or a β-naphthol glycidyl ether moiety,
(18) the resin composition described in any one of the above (12) to (17), wherein in general formula (1), Ar is the glycidyl ether moiety of general formula (2), and R is a hydrogen atom or a methyl group,
(19) a prepreg characterized by being obtained by impregnating a substrate with the resin composition described in any one of the above (12) to (18), and
(20) a laminate obtained by using the prepreg described in the above (19).

### Best Mode for Carrying Out the Invention

The phenol aralkyl type epoxy resin of the present invention will be described below.

Generally, a phenol aralkyl type epoxy resin refers to an epoxy resin that is derived from a phenol aralkyl resin of novolak structure comprising units of a phenol compound such as phenols or naphthols and units of an arene compound in a molecule.

For example, the epoxy resin represented by general formula (7): 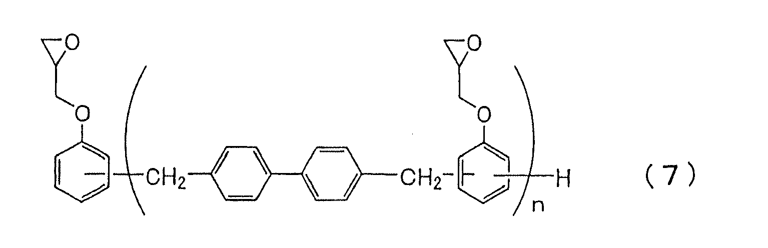 (in the formula, n represents a repetition number)
is a phenol aralkyl type epoxy resin that has recently attracted attention because it has excellent properties such as flame retardancy, adherence, and water resistance. The phenol aralkyl resin that is the raw material of the epoxy resin of the present invention is generally synthesized by methods as described in Japanese Patent No. 3122834 and Japanese Patent Application Laying Open (KOKAI) No. 2001-40053. Examples of general synthesis reaction include condensation reaction of a substituted methylenebiphenyl compound and phenols, such as, specifically, condensing 4,4'-bismethoxymethylbiphenyl and phenols under acidic conditions, or condensing 4,4'-bishalogenomethylbiphenyl and phenols under acidic conditions. By glycidylating the thus obtained phenol aralkyl resin, the compound of the above described general formula (1) is obtained. Commercial products include, for example, NC-3000 and NC-3000-H manufactured by Nippon Kayaku Co., Ltd.
Phenols used in the synthesis of the above described phenol aralkyl resin are compounds having one phenolic hydroxyl group in the aromatic ring. Substituents other than the phenolic hydroxyl group in the aromatic ring include, a hydrogen atom, a saturated or unsaturated alkyl group having 1 to 8 carbon atoms, an aryl group, and the like. Specific examples of the above described phenols include, but not limited to, phenol, o-cresol, m-cresol, p-cresol, ethylphenol, n-propylphenol, isopropylphenol, t-butylphenol, octylphenol, nonylphenol, phenylphenol, cyclohexylphenol, xylenol, methylpropylphenol, methylbutylphenol, α-naphthol, β-naphthol, and the like. In the present invention, among these phenols, phenol, cresol, allylphenol, phenylphenol, and naphthol are preferred.

When the phenol aralkyl type epoxy resin of general formula (1) obtained by simple epoxidation as described above is stored dissolved in a solvent, crystals precipitate, particularly when its purity is higher. When this is used particularly in a liquid curable resin composition, the organic component that is uniform in the composition during manufacture is nonuniformly distributed by crystal precipitation during cold storage, causing failures, such as poor curing, and curing property as designed being not obtained. According to Patent Document 3, it is confirmed that such crystallization occurs noticeably when the ratio of para bonds is higher in the bond position relationship between the methylene group and the hydroxyl group in the structure of general formula (8): 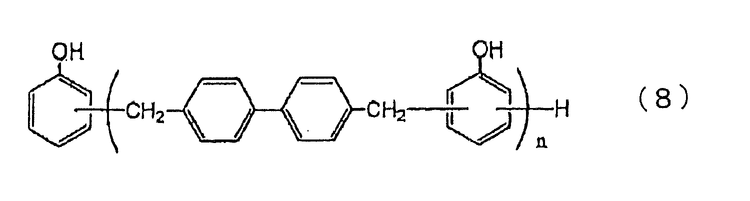 (in the formula, n represents a repetition number)
Therefore, it is reported that crystallization can be prevented by decreasing the ratio of para bonds in the bond position relationship between the methylene group and the hydroxyl group in the structure of general formula (8). However, an improvement in solvent solubility using the approach is not always sufficient.

The phenol aralkyl type epoxy resin of the present invention is characterized in that the content (the area % measured by gel permeation chromatography (GPC)) of a bifunctional compound, that is, a compound having two epoxy groups, is 20% or less. For the compound of the above described general formula (1), the bifunctional compound corresponds to a compound in which n=1. If the content of the bifunctional compound can be made to be 20 area % or less, crystallization can be avoided even for compounds outside the range defined in Patent Document 3, that is, compounds in which the ratio of the ortho bond and the para bond is 1.2 or less. For compounds in which the ortho bond/para bond molar ratio is more than 1.2, crystallization can be avoided for a longer period.

A suitable method of manufacturing the phenol aralkyl type epoxy resin of the present invention will be described below, but the method of manufacturing the epoxy resin of the present invention is not limited to the suitable manufacturing method of the present invention described below, as long as the content of the bifunctional compound can be made to be 20 area % or less.

The point of the suitable method of manufacturing the epoxy resin of the present invention described below is to selectively remove (cut) low molecular weight compounds. An approach of selectively removing low molecular weight compounds will be specifically described below.

For the solvent solubility of the epoxy resin, generally, the epoxy resin has low solubility in alcohols and hydrocarbon-based compounds, and a decrease in solubility in these solvents is noticeable as the molecular weight becomes higher. The epoxy resin tends to have lower solubility in aromatic hydrocarbons, ketones, esters, and the like, as well, depending on its structure. By adjusting this solubility, phenol aralkyl type epoxy resins of low molecular weight being lower than an oligomer level can be selectively removed, and phenol aralkyl type epoxy resins of an oligomer level can be easily taken out. By this approach, impurities contained in the raw material can also be removed, and its curing property and cured material property can be improved.

The suitable method of manufacturing the phenol aralkyl type epoxy resin of the present invention roughly comprises the following three steps:
(a) the step of dissolving an epoxy resin in a solvent (good solvent), in which the epoxy resin is easily dissolved, and uniformly mixing the epoxy resin and the solvent;
(b) the step of mixing the mixture obtained in step (a) with a solvent (poor solvent), in which trifunctional or higher functional molecules in the epoxy resin and the good solvent are less soluble, to cause two-layer separation; and
(c) the step of separating the solution or suspension that is separated into two layers, removing the solvent from the good solvent layer, and recovering the epoxy resin.

Without using the good solvent in step (a), a liquid epoxy resin as is can be subjected to step (b), or a solid epoxy resin can be heated and melted and then subjected to step (b). Even if the good solvent is used, the resin may be heated and melted.

The epoxy resin that can be used here may be commercial products or synthesized ones. The structure is not particularly limited, as long as it is of a phenol aralkyl type epoxy resin. Specific examples include phenol aralkyl type epoxy resins produced by glycidylating polymers (phenol aralkyl resins) of phenol compounds, such as phenols and naphthols, with aromatic alkoxymethyl compounds, hydroxymethyl compounds, and halogenomethyl compounds (such as 4,4'-bis(chloromethyl)-1,1'-biphenyl, 4,4'-bis(methoxymethyl)-1,1'-biphenyl, 1,4-bis(chloromethyl)benzene, 1,4-bis(methoxymethyl)benzene, 4,4'-bis(hydroxymethyl)-1,1'-biphenyl, and 1,4-bis(bromomethyl)benzene), as well as phenol aralkyl type epoxy resins produced by glycidylating polymers (phenol aralkyl resins) of phenol compounds, such as phenols and naphthols, and aromatic dichloromethyls (such as α,α'-dichloroxylene and bischloromethylbiphenyl).

Good solvents used in the above described manufacturing method include ketone-based solvents, ester-based solvents, ether-based solvents, non-protonic, polar, high boiling point solvents, or aromatic hydrocarbons. Specific examples include ketone-based solvents such as acetone, methyl ethyl ketone, methyl isobutyl ketone, cyclopentanone, and cyclohexanone, ester-based solvents such as ethyl acetate, butyl acetate, ethyl butyrate, carbitol acetate, and γ-butylolactone, ether-based solvents such as tetrahydrofuran, dioxane, and propylene glycol monomethyl ether, non-protonic, polar, high boiling point solvents such as N-methylpyrrolidone, dimethylsulfoxide, dimethylsulfone, dimethylformamide, and dimethylacetamide, aromatic hydrocarbons such as toluene and xylene, and the like, and among these, ketone-based solvents or ester-based solvents are preferred. These may be used alone, or may be used mixed with other solvents. But, the good solvent should be selected considering the combination with a poor solvent described below as well. For example, if solvents having polarity close to each other are used, a uniform solution can be formed without performing two-layer separation. Alternatively, depending on the combination, it is also possible that only a colloidal dispersion is formed. Therefore, the combination of the resin, the good solvent, and the poor solvent needs to be considered appropriately. This selection of the solvents determines the amount of the bifunctional compound remaining in the resin.

Poor solvents used in the above described manufacturing method include alcohols, ketone-based solvents, ester-based solvents, and aliphatic and aromatic hydrocarbons, and these may be water containing solvents. Whether being a poor solvent or not depends on the resin used, but the elution of the resin into the poor solvent is important. Basically, among the poor solvents described above, organic solvents are preferred. Specific examples include alcohols such as methanol, ethanol, isopropyl alcohol, butanol, ethylene glycol, and propylene glycol, linear ketones such as methyl isobutyl ketone and 3-hexanone, esters such as ethyl acetate, butyl acetate, and ethyl propionate, aliphatic hydrocarbons such as hexane, pentane, and cyclohexane. Among them, alcohols are most preferred. Preferable combinations include combinations using ketone-based solvents and ester-based solvents as the good solvent and alcohols as the poor solvent. These may be used alone, or may be used mixed with other solvents.

The description of each step in the above described manufacturing method will be added below.

Step (a): The amount of the good solvent used is 500 weight % or less, preferably 100 weight % or less, based on the resin. The heating temperature is from room temperature to 200°C. Resins that are dissolved or are liquid at room temperature need not be heated.

Step (b): The amount of the poor solvent used is 50 to 1000 weight %, preferably 50 to 300 weight %, based on the resin. In mixing, it is preferable to perform heating, stirring, and reflux, so that the resin is sufficiently dispersed. The purity and softening point of the epoxy resin obtained can be controlled by the combination of the good solvent in step (a) and the poor solvent in step (b) and the amount of use. For example, the softening point is higher, if the amount of the bifunctional compound is less. For the phenol aralkyl type epoxy resin to which the present invention is directed, due to the specificity of its structure, the bifunctional compound can be selectively removed by the above described suitable manufacturing method of the present invention. For example, when methyl isobutyl ketone is used as the good solvent, methanol is used as the poor solvent, and the phenol aralkyl type epoxy resin is the epoxy resin of general formula (4), the molecular weight distribution of the epoxy resin contained in the methanol is such that the bifunctional compound is 60 area % or more.

Step (c): in step (c), the standing time from step (b) is not particularly specified, as long as the stage of two-layer separation is achieved, but it is preferably 10 minutes to 5 hours as a standard. Finally, the solvent is recovered from the remainder left after removing the poor solvent layer, thereby, the target phenol aralkyl type epoxy resin can be obtained. It is also possible to further reduce low molecular weight compounds by repeating these (a) to (c).

The epoxy resin obtained as described above is an epoxy resin mainly comprising a trifunctional or higher compound having low crystallinity, and its epoxy equivalent is 270 g/eq or more, preferably 280 g/eq or more and 350 g/eq or less.

The softening point of the epoxy resin obtained is 60°C or more, preferably 70°C or more, and, further, 130°C or less, more preferably 110°C or less is preferred in terms of easy use.

Next, the curable resin composition of the present invention will be described. The curable resin composition of the present invention contains the epoxy resin of the present invention and a curing agent.

In the curable resin composition comprising the epoxy resin of the present invention and a curing agent as essential components, the epoxy resin of the present invention can be used alone or in combination with other epoxy resins. When used in combination, the proportion of the epoxy resin of the present invention in an epoxy resin is preferably 5 weight % or more, more preferably 10 weight % or more. The epoxy resin of the present invention can also be used as an additive or modifier for resin compositions other than the curable resin composition of the present invention, and can improve flexibility, heat resistance, and the like. Usually, it is general to add rubber components and a thermoplastic resin as modifiers in order to improve property such as toughness, but it is a well known fact that this generally decreases mechanical properties such as heat resistance in exchange for toughness. However, the epoxy resin of the present invention can modify property without decreasing heat resistance, even if it is used as an additive.

Specific examples of other epoxy resins that can be combined with the epoxy resin of the present invention include glycidyl ether-based epoxy resins produced by glycidylating polycondensates of bisphenols (such as bisphenol A, bisphenol F, bisphenol S, biphenol, and bisphenol AD) and phenols (such as phenol, alkyl substituted phenol, aromatic substituted phenol, naphthol, alkyl substituted naphthol, dihydroxybenzene, alkyl substituted dihydroxybenzene, and dihydroxynaphthalene) with various aldehydes (such as formaldehyde, acetaldehyde, alkylaldehyde, benzaldehyde, alkyl substituted benzaldehyde, hydroxybenzaldehyde, naphthaldehyde, glutaraldehyde, phthalaldehyde, crotonaldehyde, and cinnamaldehyde), polymers of phenols and various diene compounds (such as dicyclopentadiene, terpenes, vinylcyclohexene, norbornadiene, vinylnorbornene, tetrahydroindene, divinylbenzene, divinylbiphenyl, diisopropenylbiphenyl, butadiene, and isoprene), polycondensates of phenols and ketones (such as acetone, methyl ethyl ketone, methyl isobutyl ketone, acetophenone, and benzophenone), polymers (phenol aralkyl resins) of phenols with aromatic alkoxymethyl compounds, hydroxymethyl compounds, and halogenomethyl compounds (such as 4,4'-bis(chloromethyl)-1,1'-biphenyl, 4,4'-bis(methoxymethyl)-1,1'-biphenyl, 1,4-bis(chloromethyl)benzene, 1,4-bis(methoxymethyl)benzene, 4,4'-bis(hydroxymethyl)-1,1'-biphenyl, and 1,4-bis(bromomethyl)benzene), in which the content of a bifunctional compound is more than 20%, polycondensates of bisphenols and various aldehydes, alcohols, and the like; alicyclic epoxy resins; glycidyl amine-based epoxy resins; glycidyl ester-based epoxy resins; and the like, but other epoxy resins are not limited to these as long as they are epoxy resins usually used. These may be used alone, or two or more of these may be used.

In the curable resin composition of the present invention, the curing agents include, for example, amine-based compounds, acid anhydride-based compounds, amide-based compounds, phenol-based compounds, and the like. Specific examples of the curing agents that can be used include, but not limited to, amine-based compounds such as diaminodiphenylmethane, diethylenetriamine, triethylenetetramine, diaminodiphenylsulfone, and isophoronediamine, amide-based compounds such as dicyandiamide, and polyamide resin synthesized by dimers of linolenic acid and ethylenediamine, acid anhydride-based compounds such as phthalic anhydride, trimellitic anhydride, pyromellitic anhydride, maleic anhydride, tetrahydrophthalic anhydride, methyltetrahydrophthalic anhydride, methylnadic anhydride, hexahydrophthalic anhydride, and methylhexahydrophthalic anhydride, phenol-based compounds such as polycondensates of bisphenols (such as bisphenol A, bisphenol F, bisphenol S, biphenol, and bisphenol AD) and phenols (such as phenol, alkyl substituted phenol, aromatic substituted phenol, naphthol, alkyl substituted naphthol, dihydroxybenzene, alkyl substituted dihydroxybenzene, and dihydroxynaphthalene) with various aldehydes (such as formaldehyde, acetaldehyde, alkylaldehyde, benzaldehyde, alkyl substituted benzaldehyde, hydroxybenzaldehyde, naphthaldehyde, glutaraldehyde, phthalaldehyde, crotonaldehyde, and cinnamaldehyde), polymers of phenols and various diene compounds (such as dicyclopentadiene, terpenes, vinylcyclohexene, norbornadiene, vinylnorbornene, tetrahydroindene, divinylbenzene, divinylbiphenyl, diisopropenylbiphenyl, butadiene, and isoprene), polycondensates of phenols and ketones (such as acetone, methyl ethyl ketone, methyl isobutyl ketone, acetophenone, and benzophenone), polymers (phenol aralkyl resins) of phenols with aromatic alkoxymethyl compound, hydroxymethyl compound, and halogenomethyl compound (such as 4,4'-bis(chloromethyl)-I, 1'-biphenyl, 4,4'-bis(methoxymethyl)-1, 1'-biphenyl, 1,4-bis(chloromethyl)benzene, 1,4-bis(methoxymethyl)benzene, 4,4'-bis(hydroxymethyl)-1,1'-biphenyl, and 1,4-bis(bromomethyl)benzene), polycondensates of phenols and aromatic dichloromethyls (such as α,α'-dichloroxylene and bischloromethylbiphenyl), polycondensates ofbisphenols and various aldehydes, and modified ones of these, imidazole, a BF₃-amine complex, guanidine derivatives, and the like.

In the curable resin composition of the present invention, the amount of the curing agent used is preferably 0.5 to 1.5 equivalent, particularly preferably 0.6 to 1.2 equivalent, per 1 equivalent of the epoxy groups of the epoxy resin. If the amount is less than 0.5 equivalent or more than 1.5 equivalent per 1 equivalent of the epoxy groups, in either case, curing is likely to be incomplete, so that good curing property may not be obtained.

In addition, in using the above described curing agents, curing accelerators may be combined. Curing accelerators that can be used include, for example, imidazoles such as 2-methylimidazole, 2-ethylimidazole, 2-phenylimidazole, and 2-ethyl-4-methylimidazole, tertiary amines such as 2-(dimethylaminomethyl)phenol, triethylenediamine, triethanolamine, and 1,8-diazabicyclo[5.4.0]undecene-7, organic phosphines such as triphenylphosphine, diphenylphosphine, and tributylphosphine, metal compounds such as tin octylate, tetrasubstituted phosphonium tetrasubstituted borate such as tetraphenylphosphonium tetraphenylborate and tetraphenylphosphonium ethyltriphenyl borate, tetraphenylboron salts such as 2-ethyl-4-methylimidazole tetraphenylborate, N-methylmorpholine tetraphenylborate, and the like. For the amount of the curing accelerator when it is used, 0.01 to 15 parts by weight of the curing accelerator is used as required, based on 100 parts by weight of the epoxy resin.

Further, various compounding agents, such as inorganic fillers, silane coupling materials, release agents, and pigments, and various thermosetting resins can be added as required to the curable resin composition of the present invention. Inorganic fillers include, but not limited to, powders of crystalline silica, fused silica, alumina, zircon, calcium silicate, calcium carbonate, silicon carbide, silicon nitride, boron nitride, zirconia, forsterite, steatite, spinel, titania, talc, and the like, and beads obtained by making these spheric, and the like. These may be used alone, or two or more of these may be used. These inorganic fillers are preferably used in a proportion of 50 to 90 weight % in the curable resin composition, in view of the heat resistance, moisture resistance, mechanical properties and the like of the cured material of the epoxy resin composition.

Further, publicly known additives can be compounded as required to the curable resin composition of the present invention. Specific examples of additives that can be used include polybutadiene and modified polybutadiene, modified acrylonitrile copolymers, polyphenylene ether, polystyrene, polyethylene, polyimide, fluororesin, maleimide-based compounds, cyanate ester-based compounds, silicone gel, silicone oil, inorganic fillers such as silica, alumina, calcium carbonate, quartz powder, aluminum powder, graphite, talc, clay, iron oxide, titanium oxide, aluminum nitride, asbestos, mica, glass powder, glass fiber, glass nonwoven fabric, or carbon fiber, surface treatment agents for fillers, such as silane coupling agents, release agents, and colorants such as carbon black, phthalocyanine blue, and phthalocyanine green.

The curable resin composition of the present invention is obtained by uniformly mixing the above described components. The curable resin composition of the present invention can easily be turned into its cured material by methods similar to conventionally known methods. For example, the cured material can be obtained by sufficiently mixing epoxy resin, a curing agent, and, if needed, a curing accelerator, an inorganic filler, a compounding agent, and various thermosetting resins, using an extruder, a kneader, a roll, or the like, as required, until the mixture is uniform, to obtain the curable resin composition of the present invention, molding the curable resin composition by a melt casting method, a transfer molding method, an injection molding method, a compression molding method, or the like, and further heating it at 80 to 200°C for 2 to 10 hours.

The curable resin composition of the present invention may comprise a solvent in some cases. The curable resin composition comprising a solvent can be turned into the cured material of the curable resin composition of the present invention by impregnating with it a substrate such as glass fiber, carbon fiber, polyester fiber, polyamide fiber, alumina fiber, or paper, heating and drying the substrate to obtain a prepreg, and heat press molding the prepreg. The content of the solvent in this curable resin composition is generally about 10 to 70 weight %, preferably about 15 to 70 weight %, based on the total amount of the curable resin composition of the present invention and the solvent. In addition, the curable resin composition comprising the solvent can also be used as varnish. Solvents include, for example, γ-butyrolactones, amide-based solvents such as N-methylpyrrolidone (NMP), N,N-dimethylformamide (DMF), N,N-dimethylacetamide, and N,N-dimethylimidazolidinone, sulfones such as tetramethylenesulfone, ether-based solvents such as diethylene glycol dimethyl ether, diethylene glycol diethyl ether, propylene glycol monomethyl ether, propylene glycol monomethyl ether monoacetate, and propylene glycol monobutyl ether, preferably lower alkylene glycol mono- or di-lower alkyl ether, ketone-based solvents such as methyl ethyl ketone and methyl isobutyl ketone, preferably di-lower alkyl ketone in which two alkyl groups may be the same or different, and aromatic-based solvents such as toluene and xylene. These may be used alone, or a mixed solvent of two or more of these may be used.

A sheet-like adhesive can be obtained by applying the above described varnish on a release film, removing the solvent under heating, and achieving B-stage. This sheet-like adhesive can be used as an inter-layer insulation layer in a multilayer substrate and the like.

The cured material obtained in the present invention can be used in various applications. Generally, applications include various applications in which thermosetting resins such as epoxy resins are used, for example, adhesives, paints, coating agents, molded materials (including sheets, films, FRPs, and the like), insulation materials (printed boards, wire covers, and the like), and sealants, as well as additives for other resins and the like.

Adhesives include adhesives for civil engineering, construction, automobiles, general paperwork, and medical care, as well as adhesives for electronic materials. Among these, adhesives for electronic materials include inter-layer adhesives for multilayer substrates such as build-up boards, adhesives for semiconductors, such as die bonding agents and underfills, adhesives for packaging, such as underfills for BGA reinforcement, anisotropic conductive films (ACFs), and anisotropic conductive pastes (ACPs), and the like.

Sealants can include potting, dipping, and transfer molding sealing for capacitors, transistors, diodes, light emitting diodes, ICs, LSIs, and the like, potting sealing for COB, COF, TAB and the like for ICs and LSIs, underfills for flip chips and the like, sealing in packaging IC packages such as QFPs, BGAs, and CSPs (including underfills for reinforcement), and the like.

Next, another kind of the resin composition of the present invention will be described.

This resin composition contains the epoxy resin of the present invention, and a cyanate compound represented by general formula (5): 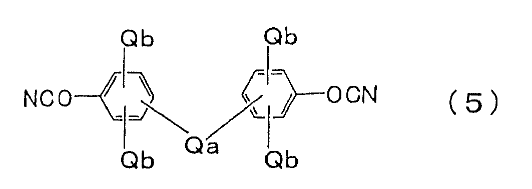 (in the formula, Qa represents a direct bond, or a substituent or atom selected from the group of a methylene group, an isopropylidene group, a hexafluoroisopropylidene group, an ethylene group, an ethylidene group, bis(methylidene)benzene group, a bis(methylidene)biphenyl group, a biphenylmethylidene group, a phenylmethylidene group, a bis(isopropylidene)phenyl group, a dicyclopentadienyl group, an oxygen atom, and a sulfur atom. Qb represents a hydrogen atom or an alkyl group having 1 to 4 carbon atoms, and each Qb may be the same or different from each other.)
or general formula (6): 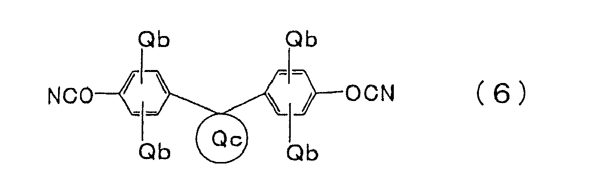 (in the formula, Qc represents a cyclic or linear alkylene group having 5 to 10 carbon atoms, or a fluorenylidene group. Qb is the same as in general formula (5).) and/or a prepolymer prepared from the cyanate compound as a raw material. The prepolymer can be obtained by heating the compound of general formula (5) or (6). These cyanate compounds and their prepolymers can be obtained by publicly known methods.

Specific examples of the cyanate compounds expressed by the above described formula (5) or the above described formula (6) that can be used in the above described resin composition of the present invention include compounds having bisphenol type structures, such as bis(3,5-dimethyl-4-cyanatephenyl)methane, bis(4-cyanatephenyl)methane, bis(3-methyl-4-cyanatephenyl)methane, bis(3-ethyl-4-cyanatephenyl)methane, 4,4-isopropylidenebisphenylisocyanate, 4,4-isopropylidenebis-2-methylphenylisocyanate, 1,1-bis(4-cyanatephenyl)ethane, 1,2-bis(4-cyanatephenyl)ethane, and 2,2-bis(4-cyanatephenyl)propane, 4,4-dicyanatediphenyl, di(4-cyanatephenyl)ether, di(4-cyanatephenyl)thioether, di(4-cyanate-3-tert-butyl-6-methylphenyl)thioether, 1,4-bis(4-cyanatephenylmethyl)benzene, 4,4{1,3-phenylenebis(1-methylethylidene)}bisphenylcyanate, 4,4{1,3-phenylenebismethylethylideneisopropylidene)}bisphenylcyanate, 4,4-bis(4-cyanatephenyl)methyl-1,1-biphenyl, 4,4-bis(4-cyanate-3-methylphenyl)methyl-1,1-biphenyl, 2,2-bis(4-cyanatephenyl)-1,1,1,3,3,3-hexafluoropropane, di(4-cyanatephenyl)fluorene, 1,1-bis(4-cyanatephenyl)cyclohexane, 2,2-bis(4-cyanatephenyl)adamantane, 9,9-bis(4-cyanatephenyl)fluorene, 9,9-bis(4-cyanate-3-methylphenyl)fluorene, 9,9-bis(4-cyanate-3-phenylphenyl)fluorene, 9,9-bis(4-cyanate-3-allylphenyl)fluorene 4,4-bis(isocyanatephenylmethyl)-1,1'-biphenyl, and the like. Cyanate esters of trihydric phenol include, for example, 1,1,1-tris(4-cyanatephenylethane)-4-cyanatephenyl-1,1,1-ethane and the like. Among these, the compounds having bisphenol type structures are preferred.

Which cyanate compound is used among these cyanate compounds can be selected as appropriate according to applications, from those having properties required for cured materials, and those having wide properties which are liquid to solid at room temperature due to their structures, and is not particularly limited, but using a cyanate compound comprising 2,2-bis(4-cyanatephenyl)propane or its prepolymer as the main component is particularly preferred, because it is good in productivity, handling property, and cost. In addition, prepolymerizing a cyanate compound (usually producing a cyclic trimer) previously is suitable for lowering the dielectric constant, and also for preventing recrystallization when varnish is prepared. In the resin composition of the present invention, the cyanate compound and/or prepolymer prepared from the cyanate compound as a raw material is used in such a range that its proportion in the total weight of three components of this component, the epoxy resin of the present invention, and another epoxy resin (below) used as an optional component (hereinafter referred to as resin components) is generally 30 to 95 weight %, preferably 50 to 85 weight %.

In the present invention, a cured material that is more excellent in electric property and the like can be obtained by combining a bismaleimide resin. Bismaleimide resins that can be used in the present invention include polyfunctional maleimide resins. Specific examples include 1,3- or 1,4-dimaleimidebenzene, 1,3-or 1,4-bis(maleimidemethylene)benzene, 1,3- or 1,4-dimaleimidecyclohexane, 1,3-or 1,4-bis(maleimidemethylene)cyclohexane, 4,4'-dimaleimidebiphenyl, bis(4-maleimidephenyl)methane, bis(4-maleimidephenyl)ether, bis(4-maleimidephenyl)sulfone, bis(4-maleimide-3-methylphenyl)methane, bis(4-maleimide-3-chlorophenyl)methane, bis(4-maleimide-3,5-dimethylphenyl)methane, 2,2'-bis(4-maleimide-3-methylphenyl)propane, 2,2'-bis(4-maleimide-3,5-dibromophenyl)propane, bis(4-maleimidephenyl)phenylmethane, 3,4-dimaleimidephenyl-4'-maleimidephenylmethane, 1,1-bis(4-maleimidephenyl)-1-phenylmethane, maleimides that are derived from addition products of formaldehyde and aniline, in which melamine and two or more aniline benzene rings are bonded via methylene groups, and the like.

In the resin composition of the present invention, the epoxy resin of the present invention can also be used in combination with other epoxy resins. Other epoxy resins that can be used include bisphenol A type epoxy resins, bisphenol F type epoxy resins, biphenol type epoxy resins, phenol novolak type epoxy resins, cresol novolak type epoxy resins, triphenylmethane type epoxy resins, phenol and dicyclopentadiene copolymerization type epoxy resins, and the like. Only one of these epoxy resins can be used, or two or more of these epoxy resins can be combined. In the resin composition of the present invention, epoxy resins comprising the epoxy resin of the present invention and other epoxy resins (hereinafter referred to as total epoxy resins) are used in such a range that their proportion in the resin component is generally 5 to 70 weight %, preferably 15 to 50 weight %.

The resin composition of the present invention can also contain a phosphorus compound as a flame retardancy providing component. The phosphorus containing compound may be of reaction type or addition type. Specific examples of the phosphorus containing compounds include phosphoric esters such as trimethylphosphate, triethylphosphate, tricresylphosphate, trixylylenylphosphate, cresyldiphenylphosphate, cresyl-2,6-dixylylenylphosphate, 1,3-phenylenebis(dixylylenylphosphate), 1,4-phenylenebis(dixylylenylphosphate), or 4,4'-biphenyl(dixylylenylphosphate); phosphanes such as 9,10-dihydro-9-oxa-10-phosphaphenanthrene-10-oxide and 10(2,5-dihydroxyphenyl)-10H-9-oxa-10-phosphaphenanthrene-10-oxide; phosphorus containing epoxy compounds obtained by reacting an epoxy resin and the active hydrogen of the above described phosphanes, red phosphorus, and the like, but phosphoric esters, phosphanes, and phosphorus containing epoxy compounds are preferred, and 1,3-phenylenebis(dixylylenylphosphate), 1,4-phenylenebis(dixylylenylphosphate), 4,4'-biphenyl(dixylylenylphosphate), and phosphorus containing epoxy compounds are particularly preferred. In the resin composition of the present invention, the content of the phosphorus containing compound is preferably phosphorus containing compound/total epoxy resin = 0.1 to 0.6. At 0.1 or less, the flame retardancy is insufficient, and at 0.6 or more, there is a fear that the moisture absorption property and dielectric property of the cured material are adversely affected.

The resin composition of the present invention can compound a binder resin as required to improve the film formation ability of the composition. Binder resins include, but not limited to, butyral-based resins, acetal-based resins, acrylic-based resins, epoxy-nylon-based resins, NBR-phenol-based resins, epoxy-NBR-based resins, polyamide-based resins, polyimide-based resins, silicone-based resins, and the like. The amount of the binder resin compounded is preferably in such a range that the flame retardancy and heat resistance of the cured material are not impaired, and generally 0.05 to 50 parts by weight, preferably 0.05 to 20 parts by weight of the binder resin is used as required, based on 100 parts by weight of the target resin component.

A curing accelerator can be added as required to the resin composition of the present invention. The curing accelerator is not particularly limited, but includes organic metal salts or metal organic complexes of iron, copper, zinc, cobalt, nickel, manganese, and tin, imidazoles, and the like. Organic metal salts or organic metal complexes specifically include naphthenic acids such as zinc naphthenate, cobalt naphthenate, copper naphthenate, lead naphthenate, and zinc naphthenate; octyl acids such as tin octylate and zinc octylate; metal chelate compounds such as lead acetylacetonate, copper acetylacetonate, cobalt acetylacetonate, and dibutyl tin maleate. Imidazoles include various imidazoles such as 2-methylimidazole, 2-phenylimidazole, 2-undecylimidazole, 2-heptadecylimidazole, 2-phenyl-4-methylimidazole, 1-benzyl-2-methylimidazole, 1-cyanoethyl-2-methylimidazole, 1-cyanoethyl-2-phenylimidazole, 1-cyanoethyl-2-undecylimidazole, 2,4-diamino-6(2'-methylimidazole(1'))ethyl-s-triazine, 2,4-diamino-6(2'-undecylimidazole(1')) ethylethyl-s-triazine, 2,4-diamino-6(2'-ethyl,4-methylimidazole(1'))ethyl-s-triazine, a 2,4-diamino-6(2'-methylimidazole(1'))ethyl-s-triazine isocyanuric acid adduct, a 2-methylimidazole isocyanuric acid 2:3 adduct, a 2-phenylimidazole isocyanuric acid adduct, 2-phenyl-3,5-dihydroxymethylimidazole, and 2-phenyl-3,5-dicyanoethoxy methylimidazole, and salts of these imidazoles and polyvalent carboxylic acids such as phthalic acid, isophthalic acid, terephthalic acid, trimellitic acid, pyromellitic acid, naphthalenedicarboxylic acid, maleic acid, and oxalic acid. Generally 0.01 to 5 parts by weight, preferably 0.1 to 3 parts by weight of the curing accelerator is used as required, based on 100 parts by weight of the resin component.

A filler may be used in the resin composition of the present invention. Fillers include fused silica, crystalline silica, silicon carbide, silicon nitride, boron nitride, calcium carbonate, barium sulfate, calcium sulfate, mica, talc, clay, alumina, magnesium oxide, zirconium oxide, aluminum hydroxide, magnesium hydroxide, calcium silicate, aluminum silicate, lithium aluminum silicate, zirconium silicate, barium titanate, glass fiber, carbon fiber, molybdenum disulfide, asbestos, and the like, preferably, fused silica, crystalline silica, silicon nitride, boron nitride, calcium carbonate, barium sulfate, calcium sulfate, mica, talc, clay, alumina, and aluminum hydroxide. One of these fillers may be used alone, or two or more of these fillers may be used mixed.

A colorant, a coupling agent, a leveling agent, an ion scavenger, and the like can be added as appropriate to the resin composition of the present invention according to the purpose of use. The colorant is not particularly limited and includes various organic-based coloring matters such as phthalocyanine, azo, disazo, quinacridone, anthraquinone, flavanthrone, perynone, perylene, dioxazine, condensed azo, and azomethine; and inorganic pigments such as titanium oxide, lead sulfate, chrome yellow, zinc yellow, chrome vermilion, Bengala, cobalt violet, dark blue, blue, ultramarine blue, carbon black, chrome green, chromium oxide, and cobalt green.

Coupling agents include silane-based coupling agents such as 3-glycidoxypropyltrimethoxysilane, 3-glycidoxypropyltrimethoxysilane, 3-glycidoxypropylmethyldimethoxysilane, 3-glycidoxypropylmethyldimethoxysilane, 2-(3,4-epoxycyclohexyl)ethyltrimethoxysilane, N-(2-aminoethyl)3-aminopropylmethyldimethoxysilane, N-(2-aminoethyl)3-aminopropylmethyltrimethoxysilane, 3-aminopropyltriethoxysilane, 3-mercaptopropyltrimethoxysilane, vinyltrimethoxysilane, N-(2-(vinylbenzylamino)ethyl)-3-aminopropyltrimethoxysilane hydrochloride, 3-methacryloxypropylitrimethoxysilane, 3-chloropropylmethyldimethoxysilane, and 3-chloropropyltrimethoxysilane, titanium-based coupling agents such as isopropyl(N-ethylaminoethylethylamino)titanate, titanium di(dioctylpyrophosphate)oxyacetate, tetraisopropyldi(dioctylphosphite)titanate, and neoalkoxytri(p-N-(β-aminoethyl)aminophenyl)titanate, and zirconium or aluminum-based coupling agents such as Zr-acetylacetonate, Zr-methacrylate, Zr-propionate, neoalkoxytris(dodecanoyl)benzenesulfonylzirconate, neoalkoxytris(ethylenediaminoethyl)zirconate, neoalkoxytris(m-aminophenyl)zirconate, ammonium zirconium carbonate, Al-acetylacetonate, Almethacrylate, and Al-propionate, and silane-based coupling agents are preferred. By using the coupling agents, the moisture resistance reliability of a cured material is improved, so that a cured material is obtained that has a small decrease in adhesion strength after moisture absorption.

Leveling agents include oligomers having a molecular weight of 4000 to 12000 which consist of acrylates such as ethyl acrylate, butyl acrylate, and 2-ethylhexyl acrylate, epoxidized soybean fatty acid, epoxidized abiethyl alcohol, hydrogenated castor oil, modified silicone, anionic and nonionic surfactants, and the like.

The resin composition of the present invention can be obtained by, for example, mixing a cyanate compound and/or a prepolymer prepared from the cyanate compound as a raw material, an epoxy resin component comprising the epoxy resin of the present invention, and compounding components, such as a phosphorus containing compound, a curing accelerator, a binder resin, an ion scavenger, a filler, a coupling agent, a colorant, and a leveling agent, as required, using a mixing machine such as a Henschel mixer or a planetary mixer, and then, uniformly dispersing them by a kneading machine such as 2 rolls, a kneader, an extruder, or a sand grinder.

In addition, the resin composition of the present invention can be turned into a varnish-like composition (hereinafter, simply referred to as varnish) by uniformly mixing the above described components in a predetermined ratio in a solvent. Solvents used include, for example, γ-butyrolactones, amide-based solvents such as N-methylpyrrolidone (NMP), N,N-dimethylformamide (DMF), N,N-dimethylacetamide, and N,N-dimethylimidazolidinone, sulfones such as tetramethylenesulfone, ether-based solvents such as diethylene glycol dimethyl ether, diethylene glycol diethyl ether, propylene glycol diethyl ether, propylene glycol monomethyl ether monoacetate, tetrahydrofuran, and dioxane, ketone-based solvents such as methyl ethyl ketone and methyl isobutyl ketone, and aromatic-based solvents such as toluene and xylene. One of these solvents may be used alone, or two or more of these solvents may be used mixed. The solvent is used in such a range that the concentration of solids in the varnish (the concentration of components other than the solvent) is generally 10 to 80 weight %, preferably 30 to 70 weight %.

In order to obtain a cured material of the resin composition of the present invention, thermal curing under conditions according to the curing system should be performed. For example, assuming printed board applications, curing conditions at 160 to 240°C for about 0.5 to 2 hours are general.

A build-up wiring board in which the resin composition of the present invention is used for the inter-layer insulation layer can be manufactured using publicly known methods, and the manufacturing method is not particularly limited, but the build-up wiring board is obtained by, for example, bonding a resin-applied metal foil using the resin composition of the present invention to a hard laminate as the core, wiring by etching and plating, and forming vias.

The resin-applied metal foil for a build-up wiring board in which the resin composition of the present invention is used for the inter-layer insulation layer can be manufactured using publicly known methods, and the manufacturing method is not particularly limited, but the resin-applied metal foil can be obtained by, for example, applying the resin composition of the present invention to an electrolytic copper foil by a comma coater, and removing the solvent by an in-line dryer. In addition, a substrate such as glass fiber, carbon fiber, polyester fiber, polyamide fiber, alumina fiber, or paper can be impregnated with the above described varnish, and heated and half-dried to obtain a prepreg, and the prepreg can be laminated and heat press molded to provide a lamination plate.

### Examples

Next, the present invention will be further specifically described by way of examples, but the present invention is not limited to these examples. In the following, parts are parts by weight, unless otherwise specified. In the examples, epoxy equivalents and softening points were measured under the following conditions:
1) epoxy equivalent: measured by a method according to JIS K-7236.
2) softening point: measured by a method according to JIS K-7234.
3) Measurement conditions for GPC are as follows:
   machine type: Shodex SYSTEM-21 column: KF-804L+KF-803L(x2)
   coupling eluent: THF(tetrahydrofuran); 1 mL/min. 40°C
   detector: UV(254 nm; UV-41)
   sample: about 0.4% THF solution (20 µL injection)
   calibration curve: standard polystyrene manufactured by Shodex is used

### Example 1

100 parts of a phenol-biphenyl novolak type epoxy resin (manufactured by Nippon Kayaku Co., Ltd., trade name: NC-3000-H, epoxy equivalent: 288 g/eq, softening point: 68°C, ortho bond : para bond (molar ratio)=60:40 to 55:45) and 50 parts of methyl isobutyl ketone were added to a flask provided with a stirring machine, a reflux cooling tube, and a stirring apparatus, and dissolved sufficiently at 100°C. After cooling to 60°C, 200 parts of methanol was added, and the obtained suspension was stirred under reflux for one hour, and then allowed to stand at 50°C for 30 minutes to confirm two-layer separation. The upper layer part of the two layers separated was extracted by decantation, and 25 parts of methyl isobutyl ketone and 200 parts of methanol were further added to the residue, and stirred again under reflux for one hour. After this, standing at 50°C for 30 minutes was performed to confirm two-layer separation. The upper layer part of the two layers separated was separated by decantation. This standing and separation operation was repeated two more times. The obtained residue was subjected to heating and reduced pressure for solvent recovery to obtain 83 parts of the target epoxy resin (hereinafter, EP1). The obtained EP 1 had an epoxy equivalent of 294 g/eq and a softening point of 78°C.

Comparison of the data of the obtained epoxy resin EP1 and NC-3000-H is described in the following Table 1. Test results of storage stability are results of cold storage at 5°C using a 70 weight % methyl ethyl ketone solution.

**Table 1**

| Epoxy resin | SP(°C) (JIS) | Bifunctional compound (area %) | MW | EEW (g/eq) | oo/pp ratio | Storage stability |
|---|---|---|---|---|---|---|
| NC-3000-H | 68 | 23 | 2614 | 288 | 1.76 | Crystal precipitation during the third week |
| EP1 | 78 | 14 | 2682 | 294 | 1.69 | Stable for two months or more |

| | | | | | | |
|---|---|---|---|---|---|---|
| Remarks: SP: softening point MW: average molecular weight calculated from GPC EEW: epoxy equivalent oo/pp ratio: indicating the molar ratio of oo and pp, wherein "oo" represents a compound of formula (1), wherein n=1 in which both bonds of biphenylmethylidene groups are bonded at the ortho position to two glycidyloxy groups existing in its structure, and "pp" represents one in which both bonds are bonded at the para position. | | | | | | |

### Example 2

100 parts of a phenol-biphenyl novolak type epoxy resin (manufactured by Nippon Kayaku Co., Ltd., trade name: NC-3000, epoxy equivalent: 274 g/eq, softening point: 54°C) and 50 parts of methyl isobutyl ketone were added to a flask provided with a stirring machine, a reflux cooling tube, and a stirring apparatus, and dissolved sufficiently at 100°C. After cooling to 60°C, 200 parts of methanol was added, and the obtained suspension was stirred under reflux for one hour, and then allowed to stand at 50°C for 30 minutes to confirm two-layer separation. The upper layer part of the two layers separated was extracted by decantation, and 25 parts of methyl isobutyl ketone and 200 parts of methanol were further added to the residue, and stirred again under reflux for one hour. After this, standing at 50°C for 30 minutes was performed to confirm two-layer separation. The upper layer part of the two layers separated was separated by decantation. This standing and separation operation was repeated three more times. The obtained residue was subjected to heating and reduced pressure for solvent recovery to obtain 76 parts of the target epoxy resin (hereinafter, EP2). The obtained EP2 had an epoxy equivalent of 283 g/eq and a softening point of 69°C.

Comparison of the data of the obtained epoxy resin EP2 and NC-3000 is described in the following Table 2. Test results of storage stability are results of cold storage at 5°C using a 70 weight % methyl ethyl ketone solution.

**Table 2**

| Epoxy resin | SP(°C) (JIS) | Bifunctional compound (area %) | MW | EEW (g/eq) | oo/pp ratio | Storage stability |
|---|---|---|---|---|---|---|
| NC-3000 | 57 | 34 | 1661 | 274 | 1.02 | Crystal precipitation on the fourth day |
| EP2 | 69 | 19 | 1932 | 283 | 1.03 | Stable for one week or more |

| | | | | | | |
|---|---|---|---|---|---|---|
| Remarks: Symbols in the table are the same as in Table 1. | | | | | | |

### Example 3

Operations similar to those in Example 1 were performed using a flask provided with a stirring machine, a reflux cooling tube, and a stirring apparatus, and 100 parts of (phenol, β-naphthol)-biphenyl novolak type epoxy resin (manufactured by the method described in Japanese Patent No. 3575776, naphthol/(phenol+naphthol)=0.34, epoxy equivalent: 284 g/eq, softening point: 69°C) to obtain 81 parts of the target epoxy resin (EP3). The obtained EP3 had an epoxy equivalent of 299 g/eq, a softening point of 83°C, and a bifunctional compound area % of 18%.

### Example 4 and Comparative Example 1

For the epoxy resin of the present invention obtained in Example 1 (EP1) and NC-3000-H, phenol novolak (manufactured by Meiwa Plastic Industries, Ltd., trade name: H-1, hydroxyl group equivalent: 105 g/eq) as a curing agent and triphenylphosphine (TPP) as a curing accelerator were compounded in a compounding ratio shown in the following Table 3 to prepare a composition, and the composition was subjected to transfer molding to obtain molded resin, which was cured at 160°C for two hours, and further at 180°C for eight hours.

**Table 3**

| | | Example 4 | Comparative Example 1 |
|---|---|---|---|
| Epoxy resin | EP1 | 147 | |
| | NC-3000-H | | 144 |
| Curing agent | Phenol novolak | 53 | 53 |
| Curing accelerator | TPP | 1.5 | 1.4 |

The results of measuring the properties of the obtained cured material are shown in Table 4. Measurement of the property values were performed by the following methods:
Glass transition point:
   TMA thermomechanical measurement apparatus: manufactured by ULVAC-RIKO, Inc., TM-7000
   Temperature rise rate: 2°C/min.
   DMA dynamic viscoelasticity measurement apparatus:
Bending strength: JIS K-6911
Fracture toughness (K1C): JIS K-6911

**Table 4**

| | Example 4 | Comparative Example 1 |
|---|---|---|
| Glass transition temperature (°C) | | |
| TMA | 160 | 145 |
| DMA | 185 | 175 |
| Bending strength (MPa) | 110 | 106 |
| Fracture toughness (K1C) (MPa) | 26 | 24 |

### Examples 5 to 6 and Comparative Example 2

Components were mixed with the composition shown in Table 5 (numerical values are "parts") to prepare varnish. The obtained varnish was held at a constant temperature of 5°C, and the occurrence of crystal precipitation after one-month storage was examined. In addition, the obtained varnish was applied to an electrolytic copper foil (thickness: 35 µm, manufactured by The Furukawa Electric Co., Ltd.) by a comma coater such that the thickness after drying was 75 µm, and the solvent was removed under heating and drying conditions at 150°C for two minutes and further at 170°C for two minutes to obtain a resin-applied copper foil. This resin-applied copper foil was bonded to both surfaces of a non-halogen FR-4 substrate (manufactured by Toshiba Chemical, trade name: TCL-W-555MU, thickness: 0.4 mm) in which copper foil was removed by etching treatment, and cured (one hour at a pressure of 1 Pa and a temperature of 170°C) to provide a sample for a flame retardancy test. In addition, the remainder left after the above described heating and drying was removed from the copper foil and subjected to compression molding, and the glass transition point of the compression molded was measured. The measurement results of the varnish storage stability, flame retardancy test, and glass transition point are shown in Table 5.

**Table 5**

| | Example 5 | Example 6 | Comparative Example 2 |
|---|---|---|---|
| Compounding ratio (parts by weight) | | | |
| Cyanate compound solution | 133 | 133 | 133 |

| Epoxy resin | | | |
|---|---|---|---|
| EP1 | 20 | | |
| EP3 | | 20 | |
| NC-3000 | | | 20 |
| Phosphorus compound | 30 | 30 | 30 |
| Curing accelerator | 1 | 1 | 1 |
| Binder resin | 20 | 20 | 20 |
| Solvent (DMF) | 90 | 90 | 90 |

| Measurement results | | | |
|---|---|---|---|
| Storage stability of resin composition (storage at 5°C) | No crystal precipitation for one month or more | No crystal precipitation for one month or more | Crystal precipitation in two weeks |
| Evaluation of build-up wiring board | | | |
| Flame retardancy (UL94 standard) | V-0 | V-0 | V-0 |
| Glass transition temperature (TMA) (°C) | 211 | 217 | 202 |

| | | | |
|---|---|---|---|
| Remarks: Cyanate compound solution: cyanate resin prepolymer B-40S (manufactured by Ciba-Geigy, a MEK solution of a bisphenol A dicyanate resin, trimer content: 40 weight %, solids: 75 weight %) Phosphorus compound: FP-500 (manufactured by Asahi Denka Co., Ltd., a phosphorus-based flame retardant) Binder resin: BPAM-01 (manufactured by Nippon Kayaku Co., Ltd., a rubber modified polyamide resin) Curing accelerator: Nikkaoctics Zinc 8 %(manufactured by NIHON KAGAKU SANGYO CO., LTD., a zinc 2-ethylhexylate mineral spirit solution) | | | |

From the above results, the phenol aralkyl type epoxy resin of the present invention is not likely to cause crystal precipitation, even if it is dissolved in a solvent and stored at low temperature, therefore, in a curable resin composition using this, a decrease in performance after a long period of storage can be prevented, contributing to an improvement in the storage stability of the resin composition. Further, the cured material of the obtained curable resin composition has very high heat resistance and also improved mechanical properties. Therefore, the epoxy resin and the curable resin composition of the present invention are very useful for a wide range of applications such as molding materials, casting materials, lamination materials, paints, adhesives, and resists.

In addition, the resin composition of the present invention using the epoxy resin of the present invention (varnish) has excellent storage stability, and yet its cured material exhibits excellent flame retardancy and heat resistance.

### Industrial Applicability

The phenol aralkyl type epoxy resin of the present invention is not likely to cause crystal precipitation, even if it is dissolved in a solvent and stored at low temperature, therefore, in a resin composition using this, a decrease in performance after a long period of storage can be prevented, contributing to an improvement in the storage stability of the resin composition. In addition, the cured material of a curable resin composition containing the epoxy resin of the present invention and a curing agent has more excellent heat resistance and mechanical strength than those conventionally commercially available. Thus, the workability during manufacture and quality control of the composition are improved, and further its curing property can also be improved, therefore, it is useful for various composite materials including insulation materials for electric and electronic parts (such as high reliability semiconductor sealing materials), and laminates (such as printed wiring boards and build-up boards) and CFRP, adhesives, paints, and the like.

In addition, a resin composition containing the epoxy resin of the present invention and cyanate compounds has excellent storage stability, and yet its cured material has excellent heat resistance, dielectric property, water resistance, and flame retardancy. The resin composition is useful for the manufacture of copper attached laminates used for electronic circuit boards, and as sealing materials, molding materials, casting materials, adhesives, electrical insulation paint materials, and the like, used for electronic parts.

## Claims

1. An epoxy resin **characterized by** comprising a phenol aralkyl type epoxy resin in which a content (an area % measured by gel permeation chromatography) of a bifunctional compound is 20% or less.

2. The epoxy resin according to claim 1, wherein the phenol aralkyl type epoxy resin is of a structure represented by general formula (1): 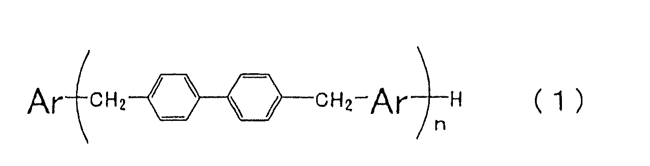 (in formula (1), n represents an average repetition number value of 1 to 10. Ar represents a glycidyl ether moiety of general formula (2): 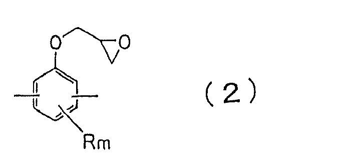 or general formula (3): 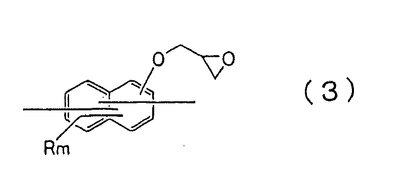 and may be the same or different from each other. In general formulas (2) and (3), m represents an integer of 0 to 3, and R each represents any of a hydrogen atom, a saturated or unsaturated alkyl group having 1 to 8 carbon atoms, and an aryl group, and may be the same or different from each other.)

3. The epoxy resin according to claim 2, wherein the phenol aralkyl type epoxy resin is of a structure represented by general formula (4): 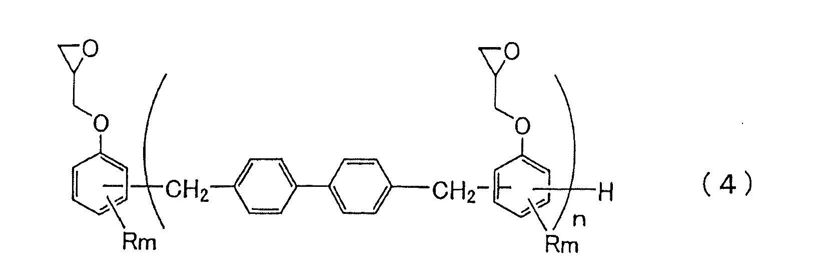 (in the formula, m represents an integer of 0 to 3, n represents an average repetition number value of 1 to 10, and R each represents any of a hydrogen atom, a saturated or unsaturated alkyl group having 1 to 8 carbon atoms, and an aryl group, and may be the same or different from each other.)

4. The epoxy resin according to claim 2, wherein in general formula (1), all Rs are a hydrogen atom.

5. The epoxy resin according to any one of claims 1 to 4, having a softening point of 70°C or more.

6. The epoxy resin according to any one of claims 1 to 4, having a softening point of 60°C or more and an epoxy equivalent of 270 g/eq or more.

7. A method of manufacturing the epoxy resin according to any one of claims 1 to 6, **characterized by** extracting and removing a bifunctional compound from a phenol aralkyl type epoxy resin or a mixed solution of the epoxy resin and its good solvent, using a solvent in which a trifunctional or higher functional molecule in the epoxy resin and the good solvent are less soluble (hereinafter referred to as a poor solvent.)

8. The method of manufacturing the epoxy resin according to claim 7, wherein the good solvent is a ketone-based solvent or an ester-based solvent.

9. The method of manufacturing the epoxy resin according to claim 7 or 8, wherein the poor solvent is an alcohol.

10. A curable resin composition containing the epoxy resin according to any one of claims 1 to 6 and a curing agent.

11. A cured material obtained by curing the curable resin composition according to claim 10.

12. A resin composition **characterized by** containing the epoxy resin according to claim 1, and a cyanate compound represented by general formula (5): 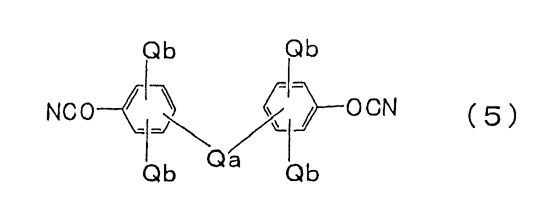 (in the formula, Qa represents a direct bond, or a substituent or atom selected from the group of a methylene group, an isopropylidene group, a hexafluoroisopropylidene group, an ethylene group, an ethylidene group, a bis(methylidene)benzene group, a bis(methylidene)biphenyl group, a biphenylmethylidene group, a phenylmethylidene group, a bis(isopropylidene)phenyl group, a dicyclopentadienyl group, an oxygen atom, and a sulfur atom. Qb represents a hydrogen atom or an alkyl group having 1 to 4 carbon atoms, and each Qb may be the same or different from each other.)
or general formula (6): 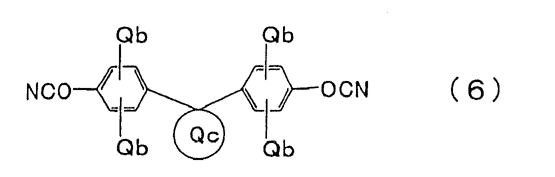 (in the formula, Qc represents a cyclic or linear alkylidene group having 5 to 10 carbon atoms, or a fluorenylidene group. Qb is the same as in general formula (5).) and/or a prepolymer prepared from the cyanate compound as a raw material.

13. The resin composition according to claim 12, wherein the epoxy resin is the epoxy resin according to claim 2.

14. The resin composition according to claim 12 or 13, wherein the cyanate compound is a compound having a bisphenol type structure.

15. The resin composition according to any one of claims 12 to 14, wherein in the cyanate compound, Qa in general formula (5) is an isopropylidene group.

16. The resin composition according to any one of claims 12 to 15, wherein Ar in general formula (1) is a glycidyl ether moiety selected from the group consisting of a phenyl glycidyl ether moiety, an ortho-cresol glycidyl ether moiety, a meta-cresol glycidyl ether moiety, and a para-cresol glycidyl ether moiety.

17. The resin composition according to any one of claims 12 to 15, wherein Ar in general formula (1) is an α-naphthol glycidyl ether moiety or a β-naphthol glycidyl ether moiety.

18. The resin composition according to any one of claims 12 to 17, wherein in general formula (1), Ar is the glycidyl ether moiety of general formula (2), and R is a hydrogen atom or a methyl group.

19. A prepreg **characterized by** being obtained by impregnating a substrate with the resin composition according to any one of claims 12 to 18.

20. A laminate obtained by using the prepreg according to claim 19.
